# EUROPÄISCHE PATENTSCHRIFT

(11) **EP 4 091 970 B1**
(45) Veröffentlichungstag und Bekanntmachung des Hinweises auf die Patenterteilung: **17.01.2024**
(21) Anmeldenummer: 21175276.1
(22) Anmeldetag: 21.05.2021
(51) Int. Cl.: B65G 17/48, B66C 13/06

(54) **VORRICHTUNG ZUM HEBEN VON LASTEN**
DEVICE FOR LIFTING LOADS
DISPOSITIF DE LEVAGE DE CHARGES

(43) Veröffentlichungstag der Anmeldung: 23.11.2022
(73) Patentinhaber: Siemens Aktiengesellschaft, 80333 München (DE)
(72) Erfinder: Janssen, Peter, 64807 Dieburg (DE); Schwank, Andreas, 65451 Kelsterbach (DE)
(74) Vertreter: Siemens Patent Attorneys

(56) Entgegenhaltungen:
- DE-A1- 3 636 459
- DE-A1-102004 045 516
- US-A- 4 273 242

## Beschreibung

Die Erfindung betrifft eine Anordnung mit synchron gekoppelten Teleskopstreben gemäß dem Oberbegriff des Patentanspruchs 1.

Die Erfindung betrifft eine Vorrichtung zum Heben und Stabilisieren von Lasten, insbesondere Gehänge für Fahrzeuge oder Fahrzeugteile, bestehend aus einem Rahmen sowie einer darunter angeordneten, die Last aufnehmenden Traverse, die über an der Traverse befestigte Hubseile höhenverstellbar ist und die mittels zweier sich kreuzender, im Wesentlichen in einer parallel zur Fahrrichtung des Rahmens gedachten Vertikalebene verlaufender, einerseits am Rahmen und andererseits an der Traverse verschwenkbar angelenkter Teleskopstreben stabilisierbar ist.

Derartige Vorrichtungen werden vor allem in der Automobilfertigung verwendet, um Fahrzeugteile oder das zu fertigende Fahrzeug in seiner jeweiligen Fertigungsstufe zwischen den einzelnen Montageorten zu transportieren. Der Rahmen ist zu diesem Zweck gewöhnlich an einer Schiene horizontal verfahrbar, die Traverse ist über die daran angelenkten Hubseile mittels am Rahmen angeordneter Hubzüge höhenverstellbar.

Die Aufhängung der Last sollte, insbesondere wenn es sich um ein für die Montage bereitgestelltes Fahrzeug handelt, möglichst stabil sein; denn viele Montagevorgänge laufen voll automatisiert ab, wobei es auf eine genaue Positionierung der Tragvorrichtung ankommt, was wiederum eine möglichst stabile Aufhängung der Last an der Traverse erfordert. Da bloße Seiltriebe mit vertikalen Tragseilen nicht geeignet sind, das Pendeln der Last in allen Richtungen gleichermaßen sicher zu verhindern, werden neben den Seilverspannungen Knickarme oder Scheren eingesetzt, die einerseits am Rahmen und and rerseits an der Traverse angelenkt werden und die Last stabilisieren, ohne die Hub- und Senkbewegungen zu behindern.

Die zahlreichen bekannten Lösungen sind aufwendig, schwer und teuer. So wird in der deutschen Patentanmeldung DE 36 36 459 A1 eine gattungsbildende Vorrichtung zur Führung einer Last beschrieben, die gleichsam aus einem verfahrbaren Rahmen besteht, an dem eine Traverse höhenverstellbar angelenkt ist.

Zum Stabilisieren von fördertechnischen Baugruppen zum Heben und Senken von Lasten (sogenannte "Gehänge") werden häufig Teleskopstreben (kurz: Teleskope) eingesetzt. Dabei wird ein Innenrohr, das in einem Außenrohr verlagert ist, während der Hub- oder Senkbewegung ein- oder ausgefahren. Um Pendelbewegungen der Last in und entgegen der Verfahrrichtung des Rahmens zu vermeiden, sind dabei zwei solcher längenveränderbarer Teleskopstreben kreuzend zwischen Rahmen und Traverse vorgesehen, die in ihren Endbereichen einerseits an der Traverse und andererseits am Rahmen gelenkig befestigt sind und dazu dienen, die in Fahrtrichtung der Tragvorrichtung auftretenden Kräfte aufzunehmen.

Das Heben der Last erfolgt bei dieser Lösung über die Hubseile, die in den Eckbereichen der Traverse angelenkt sind und über Umlenkrollen in den Eckbereichen des Rahmens zu einem zentral auf dem Rahmen angeordneten Hubwerk geführt sind. Zur Synchronisation der Ein- und Ausfahrbewegung der Teleskopstreben sind diese über einen Seilverbund aus Spannseilen stabilisiert und synchronisiert.

Solche Anordnungen mit seilbasierter Synchronisierung sind in DE 10 2004 045 516 A1 - Aßmann "Vorrichtung zum Heben und Stabilisieren von Lasten" offenbart, wobei eine die Bewegung der Teleskope synchronisierende Seilführung so gewählt ist, dass seitliche Pendelbewegungen gedämpft werden.

Aus dem beschriebenen Effekt der Seilverspannung ergeben sich beim geschilderten Stand der Technik Nachteile, beispielsweise weil durch die Seilführung durch die Schwenklager der Teleskopstreben eine ständige Ver- und Entdrillung der üblicherweise verwendeten Stahlseile und somit Seillängung und Verschleiß auftritt. Das Problem der Konstruktion bildet somit eine unerwünschte Längenänderung der Teleskopstreben infolge von in Traversenlängsrichtung angreifender Kräfte. Die Längung der Seile muss regelmäßig durch Nachspannen und regelmäßige Justierung ausgeglichen werden; gleiches gilt für Setzvorgänge, Schlupf und andere Abweichungen, die im Laufe der Zeit auftreten können. Zudem sind Montage, Justierung und Wartung nicht trivial und damit teuer und zeitaufwendig.

Es ist daher eine Aufgabe der vorliegenden Erfindung, eine konstruktiv einfache, funktionelle und wartungsarme Konstruktion für die Synchronisierung des Verfahrens der Teleskopstreben vorzuschlagen.

Es ist eine Kernidee der erfindungsgemäßen Lösung dieser Aufgabe, die Verspannung & Stabilisierung der Teleskopstreben mithilfe von fünf formschlüssigen Zugmitteln (z.B. Zahnriemen) vorzunehmen.

Die Aufgabe wird insbesondere durch die Anordnung nach Patentanspruch 1 gelöst.

Dabei wird eine Vorrichtung zum Heben und Stabilisieren von Lasten vorgeschlagen, ins-besondere Gehänge für Fahrzeuge oder Fahrzeugteile, bestehend aus einem Rahmen sowie einer darunter angeordneten, die Last aufnehmenden Traverse, die über an der Traverse befestigte Hubmittel höhenverstellbar ist, und die mittels zwei sich kreuzender, im Wesentlichen in einer parallel zur Verfahrrichtung des Rahmens gedachten Vertikalebene verlaufender, einerseits am Rahmen und andererseits an der Traverse je ein Innenrohr und ein Außenrohr aufweisende verschwenkbar angelenkter Teleskopstreben stabilisierbar ist, die ihrerseits gegen unerwünschte Längenänderungen infolge in Traversenlängsrichtung angreifender Kräfte zu einem synchronen Ein- und Ausfahren miteinander verbunden sind. Dabei erfolgt die Verbindung der Teleskopstreben mittels fünf formschlüssiger Zugmittel, wobei je ein erstes formschlüssiges Zugmittel jeweils im Innenrohr einer Teleskopstrebe mit je einer inneren Scheibe und einer äußeren Scheibe an beiden Enden gelagert ist, wobei ein zweites formschlüssiges Zugmittel (Zahnriemen) horizontal [7] zwischen den zwei Teleskopstreben auf zwei drehbaren Scheiben [8] gelagert ist, wobei die jeweils auf einer Seite befindlichen Scheiben [6,8] des jeweiligen ersten Zugmittels und des zweiten Zugmittels derart kinetisch miteinander verbunden sind, dass sich Drehbewegungen zwischen beiden Scheiben über-tragen lassen, und wobei in den beiden Außenrohren jeweils ein weiteres formschlüssiges Zugmittel befestigt ist, welches mit der inneren Scheibe des jeweiligen ersten Zugmittels kinetisch verbunden ist, so dass eine Drehbewegung dieser ersten Scheiben zu einem entsprechenden Verfahren der jeweiligen Teleskopstrebe führt. Durch dieses Prinzip werden beide Innenrohre sowohl beim Ein- als auch beim Ausfahren der Teleskopstreben synchron verfahren. Dies verhindert eine ungewünschte Längenänderung der Teleskopstreben infolge von in Traversenlängsrichtung angreifenden Kräften und die Konstruktion stabilisiert sich selbst. Diese Lösung mit formschlüssigen Zugmitteln verhindert Schlupf und muss nicht regelmäßig nachjustiert werden. Zudem werden die Zugmittel beim Heben/Senken nicht verdrillt, somit ist diese Lösung besonders verschleißarm.

Vorteilhafte Ausgestaltungen der erfindungsgemäßen Teleskopstrebe sind in den abhängigen Patentansprüchen angegeben.

Die dabei beschriebenen Merkmale und deren Vorteile können sowohl einzeln als auch in sinnvoller Kombination miteinander realisiert werden.

Vorteilhaft sind die ersten Zugmittel durch jeweils einen Zahnriemen gebildet, und die inneren und die äußeren Scheiben sind als Zahnriemenscheiben ausgebildet. Dadurch ergibt sich ein leiser und gleichmäßiger Lauf. Zudem sind Zahnriemen langzeitstabil, so dass sich regelmäßiges Nachjustieren aufgrund von Längungen des Zugmittels oft erübrigt.

In einer alternativen Variante sind die ersten Zugmittel durch jeweils eine Kette gebildet und die inneren und die äußeren Scheiben als Kettenräder ausgebildet. Ketten können dabei oft größere Kräfte als Zahnriemen übertragen, zudem können Kettenlösungen oft auch bei problematischen Betriebsbedingen eingesetzt werden. Je nach Anforderung können auch Mischlösungen eingesetzt werden. Für das zweite formschlüssige Zugmittel, also die "Querverbindung" zur Übertragung der Bewegungsinformation zwischen den Teleskopstreben, können je nach Einsatzbedingungen wahlweise Zahnriemen, Kettenlösungen oder auch Drehübertragungen (z.B. Wellenantriebe mit beidseitigen Umlenkgetrieben) oder Kombinationen davon eingesetzt werden; alle diese Lösungen können in diesem Zusammenhang als ein formschlüssiges Zugmittel bezeichnet werden.

Eine besonders laufruhige und wartungsarme Lösung ergibt sich, wenn als das weitere formschlüssige Zugmittel in jeder der Teleskopstreben jeweils ein offener Zahnriemen vorgesehen ist, wobei dieser Zahnriemen im Wesentlichen an der Innenwand des Außenrohrs der jeweiligen Teleskopstrebe in Längsrichtung verspannt ist und über ein der Lagerung der jeweiligen inneren Scheibe benachbartes Paar am Innenrohr befestigter Umlenkrollen über eine mit der inneren Scheibe kinetisch verbundene Zahnriemenscheibe geführt ist und somit eine Drehbewegung der inneren Scheibe in ein lineares Verfahren der jeweiligen Teleskopstrebe umsetzt. Dabei sind als einfache und effektive Konstruktion zur Kraftübertragung die innere Scheibe und die kinetisch damit verbundene Zahnscheibe jeweils kraftschlüssig oder formschlüssig auf einer gemeinsamen Drehachse angeordnet.

Eine dazu alternative Konstruktion, die besonders belastbar ist, sieht vor, dass als das weitere formschlüssige Zugmittel in jeder der Teleskopstreben jeweils in Längsrichtung der Teleskopstrebe eine Zahnstange vorgesehen ist, wobei im Innenrohr ein mit der inneren Scheibe kinetisch verbundenes Ritzel mit Eingriff in die Zahnstange des Außenrohrs angeordnet ist, womit eine Umsetzung einer Drehbewegung der inneren Scheibe in ein lineares Verfahren der Teleskopstrebe gegeben ist. Die Zahnstange ist vorteilhaft durch eine an der Innenwand des Außenrohrs montierte separate Zahnstange oder alternativ durch eine Folge von in der inneren Wand des Außenrohr eingearbeiteter bzw. eingefräster Vertiefungen gebildet. Bei der Variante mit der separaten Zahnstange kann diese mittels Langlochverschraubungen am Außenrohr befestig sein, so dass durch eine Längsverschiebung der Zahnstange eine Feinjustierung der Teleskopstrebe möglich ist.

Auch bei dieser Lösung sind vorteilhaft die innere Scheibe und das Ritzel jeweils form- und/oder kraftschlüssig auf einer gemeinsamen Drehachse angeordnet.

Besonders für die Justierung nach im Zuge der Erstmontage, aber auch zu Wartungszwecken ist es vorteilhaft, wenn zumindest auf einer Seite die äußere Scheibe des ersten Zugmittels und die auf dieser Seite angeordnete Scheibe des zweiten Zugmittels mittels einer Kupplung verbunden sind, wobei die Kupplung zu einer zumindest teilweisen Entkopplung der äußeren Scheibe des ersten Zugmittels und der Scheibe des zweiten Zugmittels eingerichtet ist.

Die Kupplung kann in einer vorteilhaften Ausgestaltung als Sicherheitskupplung ausgestaltet ist, wobei die Sicherheitskupplung bei Überschreiten eines Grenzdrehmoments zu der zumindest teilweisen Entkopplung eingerichtet ist. Damit kann bei Lastspitzen eine Zerstörung anderer Komponenten, insbesondere von Zahnriemen oder Ketten, verhindert werden. Die Sicherheitskupplung in einer einfachen und wirkungsvollen Konstruktion durch einen Scherstift oder eine Passfeder mit einer Sollbruchstelle gebildet ist, wobei mittels des Scherstifts oder der Passfeder im geschlossenen Zustand der Sicherheitskupplung eine Übertragung einer Drehbewegung zumindest einer der Scheiben auf die jeweils benachbarte Scheibe des anderen Zugmittels gegeben ist.

In einer Variante sind die Schwenklager der Innenrohre, die äußeren Scheiben und das zweite Zugmittel mit den zugeordneten drehbaren Scheiben an einer unteren Traverse der Vorrichtung angeordnet sind, und die Schwenklager der Außenrohre sind an dem oberen Rahmen angelenkt. Damit können die meisten Wartungsarbeiten bei abgelassener Hubvorrichtung gut zugänglich in Bodennähe vorgenommen werden. In einer alternativen Variante ist dagegen vorgesehen, dass die Schwenklager der Innenrohre, die äußeren Scheiben und das zweite Zugmittel mit den zugeordneten drehbaren Scheiben an dem oberen Rahmen der Vorrichtung angeordnet sind, und dass die Schwenklager der Außenrohre an der unteren Traverse angelenkt sind. Damit kann an der unteren Traverse Bauraum eingespart werden, zudem ist das zweite Zugmittel mit den Antriebselementen (Scheiben) vor Kollisionen im unteren Bereich besser geschützt.

Ein Ausführungsbeispiel einer erfindungsgemäßen Teleskopstrebe wird nachfolgend anhand der Zeichnung erläutert.

Dabei zeigen:
- Figur 1: eine Seitenansicht (Schnittzeichnung) der abgesenkten Vorrichtung,
- Figur 2: die Vorrichtung im eingefahrenen (gehobenen) Zustand,
- Figur 3: eine Draufsicht (Schnittebene A-A) einer inneren Scheibe und einer Scheibe des weiteren Zugmittels in der Variante "Zahnriemen",
- Figur 4: eine Schnittdarstellung der Schnittebene B-B aus der Figur 3,
- Figur 5: eine Draufsicht (Schnittebene A-A) einer inneren Scheibe und einer Scheibe des weiteren Zugmittels in der Variante "Zahnstange", und
- Figur 6: eine Schnittdarstellung der Schnittebene C-C aus der Figur 5.

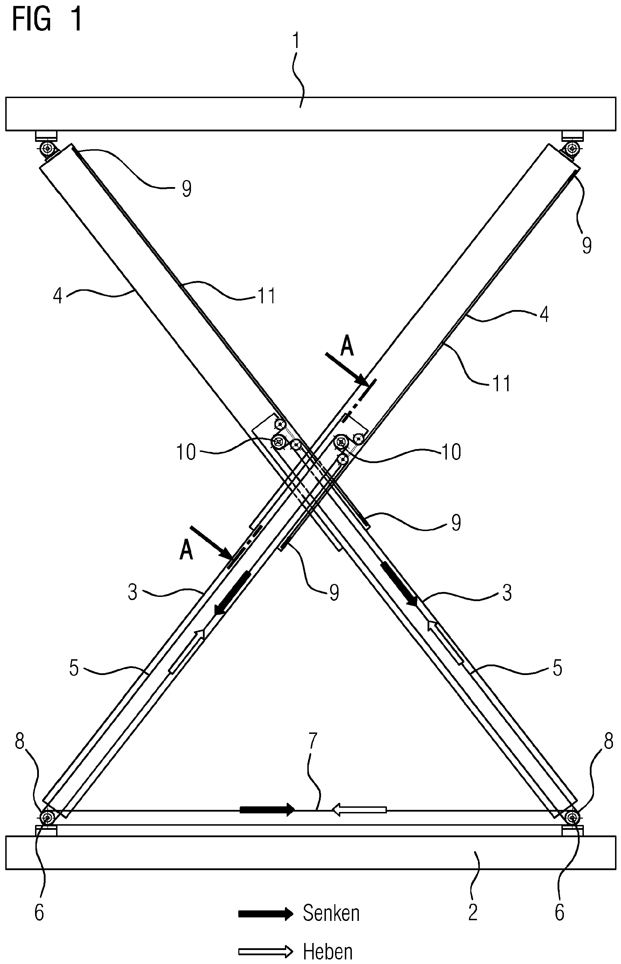

Die Figur 1 zeigt eine Anordnung zur Stabilisierung für eine Hubvorrichtung/Gehänge o.ä., bei der als Hubmittel zwischen Oberrahmen 1 und Traverse 2 ("Unterrahmen") Seile oder Bänder (in der Figur 1 nicht gezeigt) zum Einsatz kommen. Insbesondere im abgesenkten Zustand müssen Querbewegungen (Schwingen) der unteren Traverse 2 verhindert werden. Figur 1 zeigt dazu eine Verspannung und Stabilisierung von kreuzförmig zwischen Oberrahmen 1 und Traverse 2 angeordneten Teleskopstreben, bestehend aus Innenrohr 3 und Außenrohr 4, mithilfe von fünf formschlüssigen Zugmitteln 5, 7, 11. Hier sind dafür Zahnriemen eingesetzt, alternativ können die Zahnriemen 11 durch eine Zahnstangenanlage und die Zahnriemen 5, 7 durch Ketten oder andere Zug- oder Übertragungsmittel ersetzt werden.

Zwei der fünf formschlüssigen Zugmittel 5 (Zahnriemen) sind als "erste Zugmittel" jeweils im Innenrohr 3 einer Teleskopstrebe mit je zwei Scheiben 6 (äußere Scheibe) und 10 (innere Scheibe) - hier: Zahnriemenscheiben - an beiden Enden gelagert. Ein zweites formschlüssiges Zugmittel 7 (Zahnriemen) ist zwischen den zwei Teleskopstreben horizontal oberhalb des Unterrahmens 2 ebenfalls auf zwei drehbaren Scheiben 8 (hier: Zahnriemenscheiben) gelagert. Die auf einer Seite befindlichen Scheiben 6, 8 sind so gelagert, dass sich Drehbewegungen zwischen beiden Scheiben 6, 8 übertragen lassen. In den beiden Außenrohren 4 ist ein weiteres Zugmittel 11 (Zahnriemen) jeweils am Rohrende mit Klemmplatten 9 befestigt und ausgespannt. Der Zahnriemen (Zugmittel 11) wird über eine inneren Scheibe 10 parallel verbauten und mit dieser verbundenen Zahnriemenscheibe ("Umlenkung") und zwei benachbarte Umlenkrollen geführt und treibt die Umlenkung, also die Zahnriemenscheibe, während der Teleskopierbewegung an. Wird das Innenrohr 3 in einer ersten Teleskopstrebe ein- oder ausgefahren, beginnt sich die Zahnriemenscheibe ("Umlenkung") und damit auch Zahnriemenscheibe 10 zu drehen. Die Drehbewegung wird durch das Zugmittel 5 (Zahnriemen) auf die Scheiben 6 und 8 und damit auf das formschlüssige Zugmittel 7 (Zahnriemen) übertragen. Dieses Zugmittel 7 beginnt sich ebenfalls in der gleichen Richtung zu bewegen und überträgt wiederum die Drehbewegung auf die Scheibe 8 auf der gegenüberliegenden Seite. Dadurch wird die Drehbewegung an die in der zweiten Teleskopstrebe oberhalb des Unterrahmens gelagerte äußere Scheibe 6 weitergeleitet, die mit der Scheibe 8 verbunden ist. Die übertragene Drehbewegung führt zu einer Bewegung des Zugmittels 5 im dortigen Innenrohr 3 und über die innere Scheibe 10 und die damit verbundene dortige Umlenkung zu dem dortigen Zahnriemen 11, der in diesem Außenrohr 4 mit Klemmplatten 9 befestigt ist, als translatorische Bewegung, wodurch sich das Außenrohr 4 und das Innenrohr 3 relativ zueinander bewegen (verfahren).

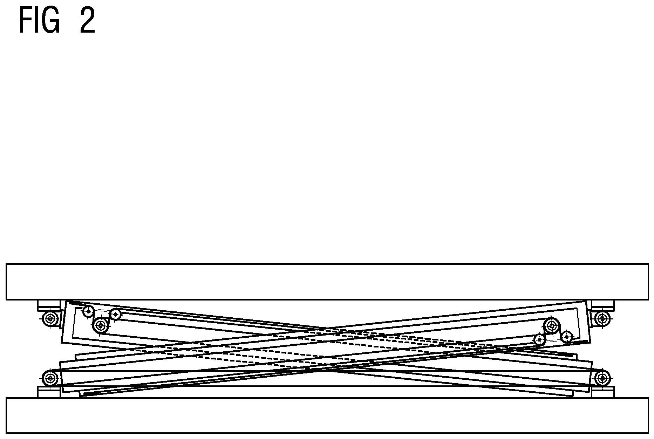

Die Figur 2 zeigt die Anordnung aus der Figur 1 in einem Zustand mit eingefahrenen Teleskopstreben.

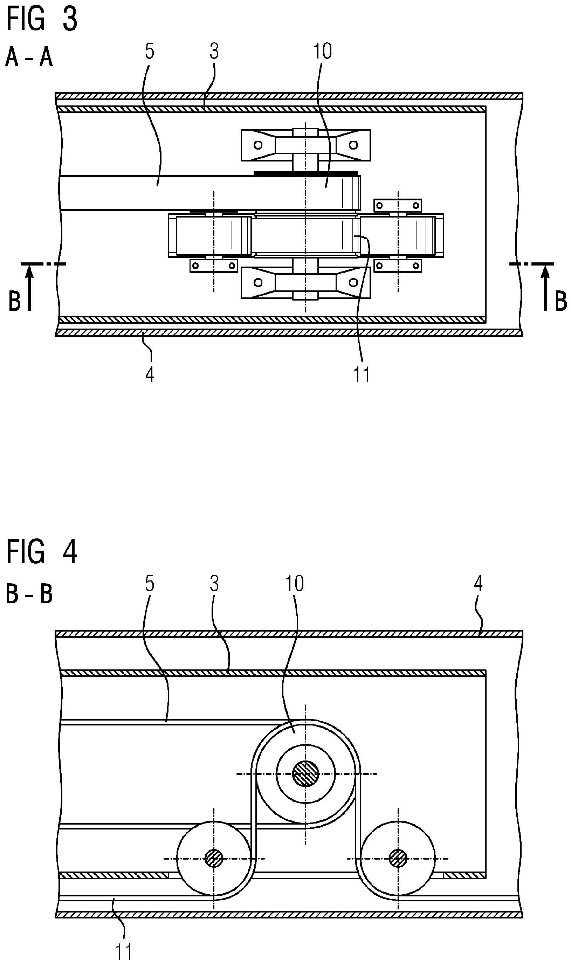

Die Figur 3 zeigt eine Draufsicht entlang der in der Figur 1 angegebenen Schnittebene A-A. Man sieht, dass die innere Scheibe 10 mit der Umlenkung auf einer gemeinsamen Drehachse montiert sind; beide Scheiben sind miteinander form- oder kraftschlüssig verbunden.

In der Figur 4 zeigt entlang der in Figur 3 eingetragenen Ebene B-B eine Seitenansicht der Drehachse mit der Scheibe 10, der Umlenkung, den Zugmitteln 5, 11 und den Umlenkrollen.

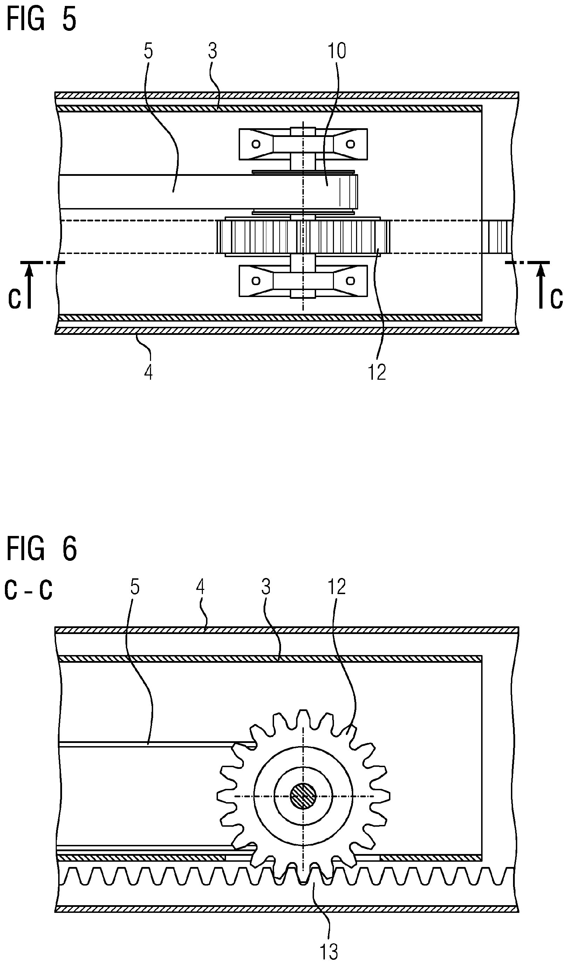

Die Figur 5 zeigt die alternative Ausführungsform, bei der das weitere Zugmittel als Zahnstange o.ä. ausgeführt ist und die Umlenkung durch ein in die Zahnstange eingreifendes Ritzel 12 gebildet ist.

Die Figur 6 zeigt entlang der in der Figur 5 eingetragenen Ebene C-C eine Seitenansicht. Die innere Scheibe für das Zugmittel 5 wird in dieser Ansicht durch die Umlenkung (Ritzel 12) verdeckt. Das Ritzel 12 befindet sich im formschlüssigen Eingriff in der Zahnstange 13, die hier als weiteres formschlüssiges Zugmittel verwendet wird. Anstelle einer separaten Zahnstange kann die Verzahnung auch direkt als eine Kontur innen in dem Außenrohr eingefräst sein.

In einer vorteilhaften Ausgestaltung erfolgt die Führung des Innenrohrs im Außenrohr der Teleskopstrebe mit einfach zu fertigenden Gleitschuhen anstelle der sonst oft üblichen Rollen- oder Kugellager. Diese Gleitschuhe werden zur einfachen Montage von außen in entsprechende Öffnungen im Außenrohr gesteckt und führen das Innenrohr. Sie sind vorzugsweise aus einem Werkstoff mit guten Gleiteigenschaften, z. B. Kunststoff, hergestellt. Diese Ausführung ist wartungsarm. Durch die Montage von außen ist ein Nachstellen (beispielsweise durch Austausch von Distanzstücken zwischen dem Außenrohr und einer Anlagefläche der Gleitschuhe / Gleitstücke) bzw. ein Austausch der Gleitschuhe einfach möglich. Zudem ergibt sich ein spielfreier und leiser Lauf.

Durch die vorstehend beschriebene Konstruktion und ihren geschilderten Varianten werden beide Innenrohre 3 sowohl beim Ein- als auch beim Ausfahren der Teleskopstreben synchron verfahren. Dies verhindert eine ungewünschte Längenänderung der Teleskopstreben infolge von in Traversenlängsrichtung angreifenden Kräften; die Konstruktion stabilisiert sich selbst und ein hin- und herschwingen, insbesondere im abgesenkten Zustand, der unteren Traverse wird gemindert bzw. verhindert.

## Patentansprüche

1. Vorrichtung zum Heben und Stabilisieren von Lasten, insbesondere Gehänge für Fahrzeuge oder Fahrzeugteile, bestehend aus einem Rahmen (1) sowie einer darunter angeordneten, die Last aufnehmenden Traverse (2), die über an der Traverse (2) befestigte Hubmittel höhenverstellbar ist, und die mittels zwei sich kreuzender, im Wesentlichen in einer parallel zur Verfahrrichtung des Rahmens gedachten Vertikalebene verlaufender, einerseits am Rahmen und andererseits an der Traverse (2) je ein Innenrohr (3) und ein Außenrohr (4) aufweisende, verschwenkbar angelenkter Teleskopstreben stabilisierbar ist, die ihrerseits gegen unerwünschte Längenänderungen infolge in Traversenlängsrichtung angreifender Kräfte synchron miteinander verbunden sind,
**dadurch gekennzeichnet,**
**dass** die Verbindung der Teleskopstreben mittels fünf formschlüssiger Zugmittel (5, 7, 11) erfolgt,
**dass** je ein erstes formschlüssiges Zugmittel (5) jeweils im Innenrohr (3) einer Teleskopstrebe mit je einer inneren Scheibe (10) und einer äußeren Scheibe (6) an beiden Enden gelagert ist,
**dass** ein zweites formschlüssiges Zugmittel (7) horizontal zwischen den zwei Teleskopstreben auf zwei drehbaren Scheiben (8) gelagert ist,
**dass** die jeweils auf einer Seite befindlichen Scheiben (6,8) des jeweiligen ersten Zugmittels (5) und des zweiten Zugmittels (7) derart kinetisch miteinander verbunden sind, dass sich Drehbewegungen zwischen beiden Scheiben (6, 8) übertragen lassen, und
**dass** in den beiden Außenrohren (4) jeweils ein weiteres formschlüssiges Zugmittel (11) befestigt ist, welches mit der inneren Scheibe (10) des jeweiligen ersten Zugmittels (5) kinetisch verbunden ist, so dass eine Drehbewegung dieser ersten Scheiben (10) zu einem entsprechenden Verfahren der jeweiligen Teleskopstrebe führt.

2. Vorrichtung nach Patentanspruch 1,
**dadurch gekennzeichnet,**
**dass** die ersten Zugmittel (5) durch jeweils einen Zahnriemen gebildet sind, und die inneren und die äußeren Scheiben (6, 10) als Zahnriemenscheiben ausgebildet sind.

3. Vorrichtung nach Patentanspruch 1,
**dadurch gekennzeichnet,**
**dass** die ersten Zugmittel (5) durch jeweils eine Kette gebildet sind, und die inneren und die äußeren Scheiben (6, 10) als Kettenräder ausgebildet sind.

4. Vorrichtung nach einem der vorhergehenden Patentansprüche,
**dadurch gekennzeichnet,**
**dass** als das weitere formschlüssige Zugmittel (11) in jeder der Teleskopstreben jeweils ein offener Zahnriemen vorgesehen ist,
wobei dieser Zahnriemen im Wesentlichen an der Innenwand des Außenrohrs (4) der jeweiligen Teleskopstrebe in Längsrichtung verspannt ist und über ein der Lagerung der jeweiligen inneren Scheibe benachbartes Paar am Innenrohr befestigter Umlenkrollen über eine mit der inneren Scheibe kinetisch verbundene Zahnriemenscheibe geführt ist und eine Drehbewegung der inneren Scheibe (10) in ein lineares Verfahren der Teleskopstrebe umsetzt.

5. Vorrichtung nach Patentanspruch 4,
**dadurch gekennzeichnet,**
**dass** die innere Scheibe (10) und die kinetisch damit verbundene Zahnscheibe auf einer gemeinsamen Drehachse angeordnet sind.

6. Vorrichtung nach einem der Patentansprüche 1-3,
**dadurch gekennzeichnet,**
**dass** als das weitere formschlüssige Zugmittel (11) in jeder der Teleskopstreben jeweils in Längsrichtung der Teleskopstrebe eine Zahnstange (13) vorgesehen ist, wobei im Innenrohr (3) ein mit der inneren Scheibe (10) kinetisch verbundenes Ritzel (12) mit Eingriff in die Zahnstange (13) des Außenrohrs (4) angeordnet ist, womit eine Umsetzung einer Drehbewegung der inneren Scheibe (10) in ein lineares Verfahren der Teleskopstrebe gegeben ist.

7. Vorrichtung nach Patentanspruch 6,
**dadurch gekennzeichnet,**
**dass** die Zahnstange (13) durch eine an der Innenwand des Außenrohrs montierte separate Zahnstange (13) oder eine durch eine Folge von in der inneren Wand des Außenrohr eingearbeiteter periodischer Vertiefungen gebildet ist.

8. Vorrichtung nach Patentanspruch 6 oder 7,
**dadurch gekennzeichnet,**
**dass** die innere Scheibe (10) und das Ritzel (13) jeweils auf einer gemeinsamen Drehachse angeordnet sind.

9. Vorrichtung nach einem der vorhergehenden Patentansprüche,
**dadurch gekennzeichnet,**
**dass** die jeweils auf einer Seite befindlichen äußeren Scheiben (6,8) des jeweiligen ersten Zugmittels (5) und des zweiten Zugmittels (7) auf einer gemeinsamen Achse angeordnet sind.

10. Vorrichtung nach einem der vorhergehenden Patentansprüche,
**dadurch gekennzeichnet,**
**dass** zumindest auf einer Seite die äußere Scheibe (6) des ersten Zugmittels (5) und die auf dieser Seite angeordnete Scheibe (8) des zweiten Zugmittels mittels einer Kupplung verbunden sind, wobei die Kupplung zu einer zumindest teilweisen Entkopplung der äußeren Scheibe (6) des ersten Zugmittels (5) und der Scheibe (8) des zweiten Zugmittels (7) eingerichtet ist.

11. Vorrichtung nach Patentanspruch 10,
**dadurch gekennzeichnet,**
**dass** die Kupplung als Sicherheitskupplung ausgestaltet ist, wobei die Sicherheitskupplung bei Überschreiten eines Grenzdrehmoments zu der zumindest teilweisen Entkopplung eingerichtet ist.

12. Vorrichtung nach Patentanspruch 11,
**dadurch gekennzeichnet,**
**dass** die Sicherheitskupplung durch einen Scherstift oder eine Passfeder mit einer Sollbruchstelle gebildet ist, wobei mittels des Scherstifts oder der Passfeder im geschlossenen Zustand der Sicherheitskupplung eine Übertragung einer Drehbewegung zumindest einer der Scheiben (6, 8) auf die jeweils benachbarte Scheibe (6, 8) des anderen Zugmittels (5, 7) gegeben ist.

13. Vorrichtung nach einem der vorhergehenden Patentansprüche,
**dadurch gekennzeichnet,**
**dass** die Schwenklager der Innenrohre (3), die äußeren Scheiben (6) und das zweite Zugmittel (7) mit den zugeordneten drehbaren Scheiben (8) an einer unteren Traverse (2) der Vorrichtung angeordnet sind, und dass die Schwenklager der Außenrohre (4) an dem oberen Rahmen (1) angelenkt sind.

14. Vorrichtung nach einem der Patentansprüche 1 - 12,
**dadurch gekennzeichnet,**
**dass** die Schwenklager der Innenrohre (3), die äußeren Scheiben (6) und das zweite Zugmittel (7) mit den zugeordneten drehbaren Scheiben (8) an dem oberen Rahmen (1) der Vorrichtung angeordnet sind, und dass die Schwenklager der Außenrohre (4) an der unteren Traverse (2) angelenkt sind.

## Claims

1. Device for lifting and stabilizing loads, in particular suspension gear for vehicles or vehicle parts, composed of a frame (1) as well as a cross-beam (2) which lies below the latter and receives the load and, by way of lifting means fastened to the cross-beam (2), is adjustable for height, and which is able to be stabilized by means of two crossing telescopic struts that run substantially in an imaginary vertical plane parallel to the displacement direction of the frame and are pivotably articulated on the frame, on the one hand, and on the cross-beam (2), on the other hand, having in each case one internal tube (3) and one external tube (4) and in turn are connected to one another in a synchronized manner so as to counter undesirable length variations as a result of forces acting in the cross-beam longitudinal direction,
**characterized**
**in that** the connection of the telescopic struts is established by means of five form-fitting traction means (5, 7, 11),
**in that** in each case one first form-fitting traction means (5) in the internal tube (3) of a telescopic strut is in each case mounted at both ends by way of a respective inner disc (10) and an outer disc (6),
**in that** a second form-fitting traction means (7) is mounted on two rotatable discs (8) so as to be horizontal between the two telescopic struts,
**in that** the discs (6, 8) of the respective first traction means (5) and of the second traction means (7) that are in each case situated on one side are kinetically connected to one another in such a manner that rotating movements between both discs (6, 8) can be transmitted, and
**in that** one further form-fitting traction means (11) is in each case fastened in the two external tubes (4), said form-fitting traction means (11) being kinetically connected to the inner disc (10) of the respective first traction means (5) such that a rotating movement of these first discs (10) leads to a corresponding displacement of the respective telescopic strut.

2. Device according to Patent Claim 1,
**characterized**
**in that** the first traction means (5) are in each case formed by a toothed belt, and the inner and the outer discs (6, 10) are configured as toothed belt pulleys.

3. Device according to Patent Claim 1,
**characterized**
**in that** the first traction means (5) are in each case formed by a chain, and the inner and the outer discs (6, 10) are configured as sprockets.

4. Device according to one of the preceding patent claims, **characterized**
**in that** an open toothed belt is in each case provided as the further form-fitting traction means (11) in each of the telescopic struts,
wherein this toothed belt in the longitudinal direction is braced substantially on the internal wall of the external tube (4) of the respective telescopic strut and by way of a pair, which is adjacent to the mounting of the respective inner disc, of deflection rollers which are fastened to the internal tube is guided over a toothed belt pulley that is kinetically connected to the inner disc and converts a rotating movement of the inner disc (10) into a linear displacement of the telescopic strut.

5. Device according to Patent Claim 4,
**characterized**
**in that** the inner disc (10) and the toothed pulley kinetically connected thereto are disposed on a common rotation axis.

6. Device according to one of Patent Claims 1-3,
**characterized**
**in that**, as the further form-fitting traction means (11), a rack (13) is in each case provided in the longitudinal direction of the telescopic strut in each of the telescopic struts,
wherein a pinion (12) kinetically connected to the inner disc (10) is disposed in the internal tube (3) so as to engage in the rack (13) of the external tube (4), thus providing a conversion of a rotating movement of the inner disc (10) into a linear displacement of the telescopic strut.

7. Device according to Patent Claim 6,
**characterized**
**in that** the rack (13) is formed by a separate rack (13) assembled on the internal wall of the external tube, or is formed as a result of periodic depressions incorporated in the inner wall of the external tube.

8. Device according to Patent Claim 6 or 7,
**characterized**
**in that** the inner disc (10) and the pinion (13) are in each case disposed on a common rotation axis.

9. Device according to one of the preceding patent claims,
**characterized**
**in that** the outer discs (6, 8) of the respective first traction means (5) and of the second traction means (7) that are in each case situated on one side are disposed on a common axis.

10. Device according to one of the preceding patent claims,
**characterized**
**in that** at least on one side the outer disc (6) of the first traction means (5) and that disc (8) of the second traction means that is disposed on this side are connected by means of a coupling, wherein the coupling is specified to at least partially decouple the outer disc (6) of the first traction means (5) and the disc (8) of the second traction means (7).

11. Device according to Patent Claim 10,
**characterized**
**in that** the coupling is designed as a safety coupling, wherein the safety coupling is specified to at least partially decouple when a critical torque is exceeded.

12. Device according to Patent Claim 11,
**characterized**
**in that** the safety coupling is formed by a shear pin or a feather key having a predetermined breaking point, wherein, in the closed state of the safety coupling, a transmission of a rotating movement of at least one of the discs (6, 8) to the respectively adjacent disc (6, 8) of the other traction means (5, 7) is provided by means of the shear pin or the feather key.

13. Device according to one of the preceding patent claims,
**characterized**
**in that** the pivot bearings of the internal tubes (3), the outer discs (6) and the second traction means (7) having the assigned rotatable discs (8) are disposed on a lower cross-beam (2) of the device, and in that the pivot bearings of the external tubes (4) are articulated on the upper frame (1).

14. Device according to one of Patent Claims 1 - 12,
**characterized**
**in that** the pivot bearings of the internal tubes (3), the outer discs (6) and the second traction means (7) having the assigned rotatable discs (8) are disposed on the upper frame (1) of the device, and in that the pivot bearings of the external tubes (4) are articulated on the lower cross-beam (2) .

## Revendications

1. Dispositif de levage et de stabilisation de charges, en particulier appareil de suspension de véhicules ou de parties de véhicule, consistant en un cadre (1) ainsi qu'en une traverse (2) disposée en-dessous et recevant la charge, qui est réglable en hauteur par des moyens de levage fixés à la traverse (2) et qui peut être stabilisée au moyen de deux montants télescopiques se croisant, s'étendant sensiblement dans un plan vertical imaginaire, parallèlement à la direction de déplacement du cadre, articulés à pivotement d'une part au cadre et d'autre part à la traverse (2), ayant respectivement un tube (3) intérieur et un tube (4) extérieur, montants, qui de leur côté sont reliés entre eux de manière synchrone à l'encontre de variations de longueur non souhaitées en raison de forces s'appliquant dans la direction longitudinale de la traverse,
**caractérisé**
**en ce que** la liaison des montants télescopiques s'effectue à l'aide de cinq moyens (5, 7, 11) de traction à complémentarité de forme,
**en ce que** respectivement un premier moyen (5) de traction à complémentarité de forme est monté respectivement dans le tube (3) intérieur d'un montant télescopique, par respectivement une poulie (10) intérieure et une poulie (6) extérieure aux deux extrémités,
**en ce qu'**un deuxième moyen (7) de traction à complémentarité de forme est monté horizontalement entre les deux montants télescopique sur deux poulies (8) tournantes,
**en ce que** les poulies (6, 8), se trouvant respectivement d'un côté, du premier moyen (5) respectif de traction et du deuxième moyen (7) respectif de traction sont reliées entre elles cinétiquement, de manière à ce que des mouvements de rotation entre les deux poulies (6, 8) se transmettent, et
**en ce que**, dans les deux tubes (4) extérieurs sont fixés respectivement un autre moyen (11) de traction à complémentarité de forme, qui est relié cinétiquement à la poulie (10) intérieure du premier moyen (5) de traction respectif, de manière à ce qu'un mouvement de rotation de cette première poulie (10) donne un déplacement correspondant du montant télescopique respectif.

2. Dispositif suivant la revendication 1,
**caractérisé**
**en ce que** les premiers moyens (5) de traction sont formés par respectivement une courroie crantée, et les poulies (6, 10) intérieure et extérieure sont constituées sous la forme de poulies de courroie crantée.

3. Dispositif suivant la revendication 1,
**caractérisé**
**en ce que** les premiers moyens (5) de traction sont formés par respectivement une chaîne, et les poulies (6, 10) intérieure et extérieure sont constituées sous la forme de roues à chaîne.

4. Dispositif suivant l'une des revendications précédentes,
**caractérisé**
**en ce qu'**il prévu comme autre moyen (11) de traction à complémentarité de forme, dans chacun des montants télescopiques, respectivement une courroie crantée ouverte, dans lequel cette courroie crantée est serrée dans la direction longitudinale sensiblement sur la paroi intérieure du tube (4) extérieur du montant télescopique respectif et passe, par une paire de rouleaux de renvoi fixés sur le tube intérieur, voisine du montage de poulie intérieure respective, sur une poulie de courroie crantée reliée cinétiquement à la poulie intérieure et transforme un mouvement de rotation de la poulie (10) intérieure en un déplacement linéaire du montant télescopique.

5. Dispositif suivant la revendication 4,
**caractérisé**
**en ce que** la poulie (10) intérieure et la poulie ainsi reliée cinétiquement sont montées sur un axe de rotation commun.

6. Dispositif suivant l'une des revendications 1 à 3,
**caractérisé**
**en ce qu'**il est prévu, comme autre moyen (11) de traction à complémentarité de forme dans chacun des montants télescopiques, respectivement une crémaillère (13) dans la direction longitudinale du montant télescopique, dans lequel, dans le tube (3) intérieur est disposé un pignon (12), relié cinétiquement à la poulie (10) intérieure avec engrenage dans la crémaillère (13) du tube (4) extérieur, grâce à quoi est donnée une transformation d'un mouvement de rotation de la poulie (10) intérieure en un déplacement linéaire du montant télescopique.

7. Dispositif suivant la revendication 6,
**caractérisé**
**en ce que** la crémaillère (13) est formée d'une crémaillère (13) distincte montée sur la paroi intérieure du tube extérieur ou d'une succession de cavités périodiques ménagées dans la paroi intérieure du tube extérieur.

8. Dispositif suivant la revendication 6 ou 7,
**caractérisé**
**en ce que** la poulie (10) intérieure et le pignon (13) sont montés respectivement sur un axe de rotation commun.

9. Dispositif suivant l'une des revendications précédentes,
**caractérisé**
**en ce que** les poulies (6, 8) extérieures, se trouvant d'un côté respectivement, du premier moyen (5) de traction respectif et du deuxième moyen (7) de traction sont disposées sur un axe commun.

10. Dispositif suivant l'une des revendications précédentes,
**caractérisé**
**en ce qu'**au moins d'un côté, la poulie (6) extérieure du premier moyen (5) de traction et la poulie (8), disposée de ce côté, du deuxième moyen de traction sont reliées au moyen d'un accouplement, dans lequel l'accouplement est agencé pour un désaccouplement au moins partiel de la poulie (6) extérieure du premier moyen (5) de traction et de la poulie (8) du deuxième moyen (7) de traction.

11. Dispositif suivant la revendication 10,
**caractérisé**
**en ce que** l'accouplement est conformé en accouplement de sécurité, l'accouplement de sécurité étant agencé pour le désaccouplement au moins partiel, si un couple limite est dépassé.

12. Dispositif suivant la revendication 11,
**caractérisé**
**en ce que** l'accouplement de sécurité est formé par une goupille de cisaillement ou par une clavette ayant un point destiné à se rompre, dans lequel, au moyen de la goupille ou de la clavette, il est donné, dans l'état fermé de l'accouplement de sécurité, une transmission d'un mouvement de rotation d'au moins l'une des poulies (6, 8) à la poulie (6, 8) voisine respective de l'autre moyen (5, 7) de traction.

13. Dispositif suivant l'une des revendications précédentes,
**caractérisé**
**en ce que** les paliers pivotants des tubes (3) intérieurs, les poulies (6) extérieures et le deuxième moyen (7) de traction avec les poulies (8) tournantes associées sont montés sur une traverse (2) inférieure du dispositif, et en ce que les paliers pivotants des tubes (4) extérieurs sont articulés sur le cadre (1) supérieur.

14. Dispositif suivant l'une des revendications 1 à 12,
**caractérisé**
**en ce que** les paliers pivotants des tubes (3) intérieurs, les poulies (6) extérieures et le deuxième moyen (7) de traction avec les poulies (8) tournantes associées sont montés sur le cadre (1) supérieur du dispositif, et en ce que les paliers pivotants des tubes (4) extérieurs sont articulés à la traverse (2) inférieure.
